# EUROPÄISCHE PATENTSCHRIFT

(11) **EP 0 802 601 B1**
(45) Veröffentlichungstag und Bekanntmachung des Hinweises auf die Patenterteilung: **05.01.2000**
(21) Anmeldenummer: 97104438.3
(22) Anmeldetag: 15.03.1997
(51) Int. Cl.: H02G 11/02, B65H 75/48

(54) **Federleitungstrommel**
Spring cable drum
Tambour à ressort pour câble

(30) Priorität: 19.04.1996 DE 29607865 U
(43) Veröffentlichungstag der Anmeldung: 22.10.1997
(73) Patentinhaber: Wampfler Aktiengesellschaft, 79576 Weil am Rhein-Maerkt (DE)
(72) Erfinder: Möbes, Mario, 79541 Lörrach (DE)
(74) Vertreter: Charrier, Rolf, Dipl.-Ing.

(56) Entgegenhaltungen:
- DE-A- 2 540 671
- FR-A- 1 261 341
- FR-A- 2 153 471
- US-A- 3 040 139
- US-A- 4 053 118

## Beschreibung

Die Erfindung betrifft eine Federleitungstrommel nach dem Oberbegriff des Anspruchs 1. Eine derartige Federleitungstrommel ist aus FR-A-2 153 471 bekannt.

Bekannte Federleitungstrommeln werden bei Stromzuführungsanlagen benutzt, bei denen die stromführende Leitung unter einer ständigen Vorspannung gehalten werden soll. Hierzu wird die Leitung auf einen als Wickel dienenden Trommelmantel aufgespult. Seitlich des Trommelmantels befinden sich Trommelschilder, um ein seitliches Herabrutschen des Leitungswickels zu verhindern. Die Leitung kann über seitlich angeordnete Schleifringkörper mit elektrischem Strom und/oder Daten beaufschlagt werden.

Diese bekannten Federleitungstrommeln weisen den Nachteil auf, daß die Feder beim Zerlegen der Trommel aufspringen und dem Wartungspersonal erheblich Verletzungen zufügen kann. Darüberhinaus müssen für beide möglichen Abzugsrichtungen der Federleitungstrommel verschiedene Trommeln gelagert werden. Das erstgenannte Problem wird durch die Federleitungstrommel gemäß FR-A-2 153 471 gelöst.

Es besteht daher die Aufgabe, eine Federleitungstrommel so weiterzubilden, daß die Lagerhaltung vermindert wird.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel einer Federleitungstrommel wird im folgenden unter Bezugnahme auf die begleitenden Zeichnungen näher beschrieben, welche zeigen:
- **Fig. 1**: einen seitlichen Schnitt durch eine Federleitungstrommel bei Abzugsrichtung links;
- **Fig. 2**: eine Explosionsdarstellung der Federleitungstrommel aus Figur 1;
- **Fig. 3**: eine Explosionsdarstellung zur Montage der in den Figuren 1 und 2 dargestellten Federleitungstrommel für Abzugsrichtung rechts; und
- **Fig. 4**: einen seitlichen Schnitt durch die in den Figuren 1 bis 3 dargestellte Federleitungstrommel in Abzugsrichtung rechts.

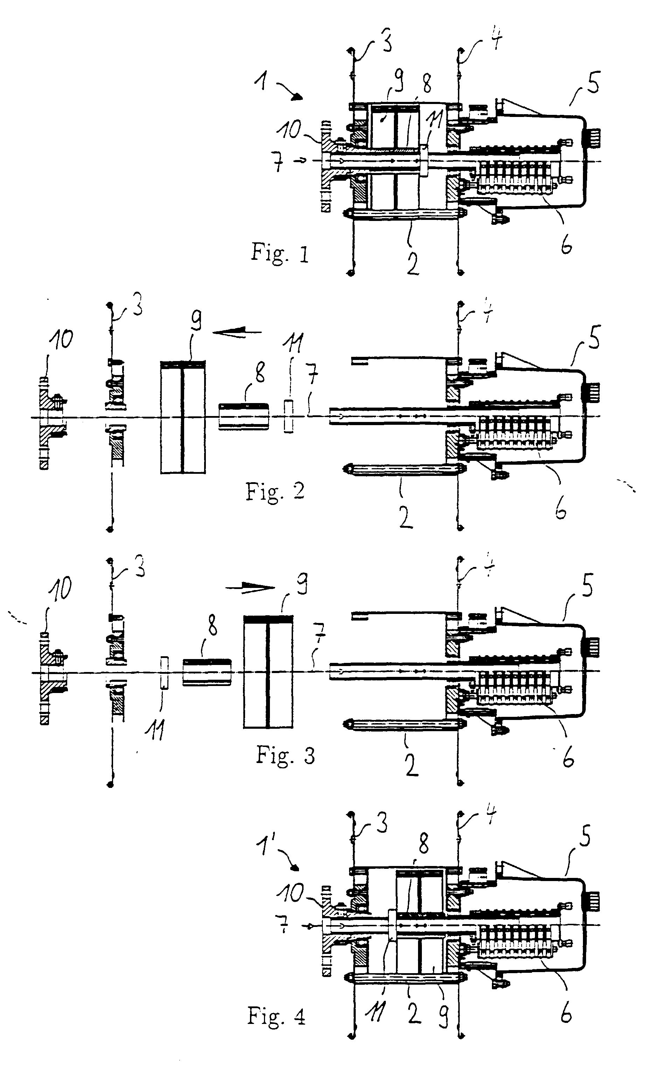

Aus den Figuren ist ersichtlich, daß die Federleitungstrommel 1, welche in Figur 1 in Abzugsrichtung links dargestellt ist, im wesentlichen aus einem Trommelmantel 2, welcher als Wicklung für die (nicht dargestellte) Leitung dient, zwei seitlichen Trommelschildern 3, 4, einem Anschlußstück 5 mit Schleifringkörpern 6, einer gemeinsamen Achse 7 und einer über eine Federnuß 8 auf diese Achse 7 geschobenen Federkassette 9 sowie einem seitlichen Flansch 10 besteht.

Falls eine Umstellung von Abzugsrichtung links auf Abzugsrichtung rechts gewünscht wird, wird der Flansch 10 gelöst, das linke Trommelschild 3 mit Lager abgezogen, die Federkassette 9 und die Federnuß 8 herausgenommen, ebenso der Stellring 11. Daraufhin werden Federkassette 9, Federnuß 8 und Stellring 11 um 180° gedreht und in umgekehrter Reihenfolge wieder auf die gemeinsame Achse 7 aufgeschoben. Dann wird das linke Trommelschild 3 mit Lager und der Flansch 10 montiert und die Anordnung nimmt die in Figur 4 gezeigte Stellung 1' ein. In dieser Stellung ist die Abzugsrichtung rechts.

Die Anordnung weist den Vorteil auf, daß sowohl für Abzugsrichtung links als auch für Abzugsrichtung rechts nur eine Federleitungstrommel 1 gelagert werden muß. Darüberhinaus ist die Feder in einer Federkassette 9 komplett gekapselt und bei Wartungsarbeiten verringert sich somit das Verletzungsrisiko für die Mitarbeiter.

## Patentansprüche

1. Federleitungstrommel (1), mit einem als Leitungswickel dienendem, im wesentlichen zylindrischen Trommelmantel (2) und einer darin angeordneten, in einer Federkassette (9) gekapselten Feder zur Erzeugung einer Vorspannung auf der abgezogenen Leitung, **dadurch gekennzeichnet**, daß die Federkassette (9) herausnehmbar und zum Wechsel der Abzugsrichtung umgekehrt wieder in den Trommelmantel (2) einsetzbar ausgebildet ist.

2. Federleitungstrommel nach Anspruch 1, **dadurch gekennzeichnet**, daß der Trommelmantel (2) seitliche Trommelschilder (3, 4) aufweist.

3. Federleitungstrommel nach einem der voranstehenden Ansprüche, **dadurch gekennzeichnet**, daß die elektrische Versorgung der Leitung über seitlich angeordnete Schleifringkörper (6) erfolgt.

4. Federleitungstrommel nach einem der voranstehenden Ansprüche, **dadurch gekennzeichnet**, daß die Trommelachse (7) eine Federnuß (8) lagert, welche ihrerseits die Federkassette (9) lagert.

## Claims

1. A spring cable drum (1) with a drum shell (2) which is essentially cylindrical to serve as a cable reel and has a spring arranged in it, encapsulated in a spring-cassette (9), for the generation of a prestress upon the cable being pulled off, characterized in that the spring-cassette (9) is removable and for changing the direction of pull- off is made so that it may be put back in the drum shell (2) again the other way round.

2. A spring cable drum as in Claim 1, characterized in that the drum shell (2) exhibits drum shields (3, 4) at the sides.

3. A spring cable drum as in one of the preceding Claims,
characterized in that
the electric supply to the cable is effected via slipring bodies (6) arranged at the side.

4. A spring cable drum as in one at the preceding Claims,
characterized in that
the axle (7) of the drum carries a spring nut (8) which in turn carries the spring cassette (9).

## Revendications

1. Tambour à ressort pour câble (1) avec une enveloppe de tambour (2) servant d'enroulement pour câble et sensiblement cylindrique et un ressort disposé à l'intérieur et encapsulé dans une cassette à ressort (9) pour générer une prétension sur le câble enlevé, caractérisé en ce que la cassette à ressort (9) est conçue de façon à pouvoir être retirée et à l'inverse être réinsérée dans l'enveloppe de tambour pour le changement du sens d'extraction.

2. Tambour à ressort pour câble selon la revendication 1, caractérisé en ce que l'enveloppe de tambour (2) présente des plaques de tambour (3, 4) latérales.

3. Tambour à ressort pour câble selon l'une quelconque des revendications précédentes, caractérisé en ce que l'alimentation électrique se fait par des corps à bague collectrice (6) disposés sur le côté.

4. Tambour à ressort pour câble selon l'une quelconque des revendications précédentes, caractérisé en ce que l'axe du tambour (7) loge une noix à ressort (8), qui à son tour loge la cassette à ressort (9).
